# EUROPEAN PATENT SPECIFICATION

(11) **EP 4 155 121 B1**
(45) Date of publication and mention of the grant of the patent: **01.10.2025**
(21) Application number: 21824877.1
(22) Date of filing: 10.06.2021
(51) Int. Cl.: B60L 58/31, B60L 58/40, B60L 50/75, B60L 58/13, H01M 16/00, H01M 8/043, H01M 8/04537, H01M 8/04955

(54) **METHOD FOR CONTROLLING FUEL CELL OF VEHICLE, DEVICE, PROGRAM, MEDIUM, AND VEHICLE**
VERFAHREN ZUR STEUERUNG EINER BRENNSTOFFZELLE EINES FAHRZEUGS, VORRICHTUNG, PROGRAMM, MEDIUM UND FAHRZEUG
PROCÉDÉ DE COMMANDE DE PILE À COMBUSTIBLE DE VÉHICULE, DISPOSITIF, PROGRAMME, SUPPORT ET VÉHICULE

(30) Priority: 15.06.2020 CN 202010542522
(43) Date of publication of application: 29.03.2023
(73) Proprietor: Great Wall Motor Company Limited, Hebei 071000 (CN)
(72) Inventor: ZHOU, Mingwang, Baoding, Hebei 071000 (CN); WANG, Baogang, Baoding, Hebei 071000 (CN); LIU, Han, Baoding, Hebei 071000 (CN); KANG, Tong, Baoding, Hebei 071000 (CN); HU, Yipo, Baoding, Hebei 071000 (CN); ZHANG, Zheng, Baoding, Hebei 071000 (CN); GAO, Ming, Baoding, Hebei 071000 (CN)
(74) Representative: dompatent von Kreisler Selting Werner - Partnerschaft von Patent- und Rechtsanwälten mbB
(86) International application number: PCT/CN2021/099465
(87) International publication number: WO 2021/254252

(56) References cited:
- CN-A- 107 054 124
- CN-A- 107 054 124
- CN-A- 107 719 163
- CN-A- 109 334 476
- CN-A- 110 040 128
- CN-A- 112 810 502
- DE-A1- 102013 207 244
- US-A- 5 631 532
- US-A1- 2002 162 694
- US-A1- 2014 277 931
- US-A1- 2016 046 204

## Description

### TECHNICAL FIELD

The present disclosure relates to the field of vehicle control technology, and in particular, to a method for controlling a fuel cell of a vehicle, an apparatus, a program, a medium and a vehicle.

### BACKGROUND

Fuel cell (e.g., hydrogen fuel cell) vehicles, when in use, will involve the activation and deactivation of fuel cell. At present, the timing to activate or deactivate of the fuel cell is determined mainly based on a current driving mode, a power requested by a power system, a power that a power battery can output and other thresholds. If the driver's driving habits are poor, frequent activation or deactivation of the fuel cell will be resulted, not only too much power of the power battery can be consumed, but also the service life of the fuel cell can also be shorten.

US 2014/277931 A1 discloses a power systems and methods for a vehicle whch can employ a fuel cell, such as a Solid Oxide Fuel Cell (SOFC), as a power source in conjunction with another power sources, such as one or more vehicle batteries, capacitors, etc. The fuel cell can be conditionally used to provide power to the electrical system, thereby reducing the load on the vehicle batteries.

DE 10 2013 207 244 A1 discloses a method which involves providing electric power for the drive system only in the hybrid vehicle battery in primary operating mode, and electrical power to the drive system of both the hybrid vehicle battery and the fuel cell in secondary operating mode. The transition between the primary operating mode and the secondary operation mode is determined on the basis of one predetermined criterion. The predetermined criterion is varied depending on the current driving situation during operation of the fuel cell hybrid vehicle.

CN 107054124 A discloses a hybrid power system based on a vehicle-mounted navigation. The hybrid power system based on the vehicle-mounted navigation comprises a fuel cell sub-system, a power cell sub-system, a whole vehicle controller, an energy management controller and a vehicle-mounted navigation, wherein the fuel cell sub-system and the power cell sub-system are connected with a whole vehicle load correspondingly, the energy management controller is connected with the fuel cell sub-system, the power cell sub-system, the whole vehicle controller and the vehicle-mounted navigation correspondingly.

### SUMMARY

In view of this, a first aspect of the present disclosure provides a method for controlling a fuel cell of a vehicle, to save electrical energy of the power battery and extend the service life of the fuel cell.

To achieve the foregoing objectives, embodiments of the present disclosure are implemented as follows:
A method for controlling a fuel cell of a vehicle is provided, the vehicle includes a fuel cell and a power battery. The method includes steps of: detecting road condition information for a planned driving route of the vehicle; detecting a battery level of the power battery; and controlling an activation or a deactivation of the fuel cell based on the road condition information and/or the battery level of the power battery.

Further, the step of controlling an activation or a deactivation of the fuel cell based on the road condition information and/or the battery level of the power battery includes a step of controlling the fuel cell to be deactivated when the battery level of the power battery is greater than or equal to a first threshold.

Further, the step of controlling an activation or a deactivation of the fuel cell based on the road condition information and/or the battery level of the power battery includes a step of controlling the fuel cell to be deactivated when the battery level of the power battery is smaller than the first threshold and greater than or equal to a second threshold, and the road condition information meets a special road condition.

Further, the step of controlling an activation or a deactivation of the fuel cell based on the road condition information and/or the battery level of the power battery includes a step of controlling the fuel cell to be activated when the battery level of the power battery is smaller than or equal to a third threshold, where the third threshold is smaller than the second threshold.

Further, the special road condition includes at least one of the following that: a ramp is smaller than a gradient threshold and a length is greater than a first length threshold, time duration of a red light is greater than a time threshold, a velocity of the vehicle is smaller than a velocity threshold, and a distance of the vehicle to a destination is smaller than a second length threshold.

The method for controlling a fuel cell of a vehicle described in the present disclosure has the following advantages with respect to the existing technologies: The vehicle includes the fuel cell and the power battery, firstly, the road condition information for the planned driving route of the vehicle is detected, then, the battery level of the power battery is detected, and finally, the activation or deactivation of the fuel cell is controlled according to the road condition information and/or the battery level of the power battery. It is determined based on the road conditions whether the vehicle needs to stop for a long time or needs to be driven slowly, and the fuel cell is controlled to be activated or deactivated to reduce the times of activation or deactivation of the fuel cell, thus the power consumption of the power battery caused by frequent activation of the fuel cell is reduced, thereby achieving the objectives of saving energy and extending the service life of the fuel cell.

A second aspect of the present disclosure provides a device for controlling a fuel cell of a vehicle to save electrical energy of the power battery and extend the service life of the fuel cell.

To achieve the above objectives, embodiments of the present disclosure are implemented as follows.

A device for controlling a fuel cell of a vehicle is provided, the vehicle includes a fuel cell and a power battery, the device includes a detection unit and a control unit. The detection unit is configured to detect road condition information for a planned driving route of the vehicle, and detect a battery level of the power battery. The control unit is configured to control an activation or a deactivation of the fuel cell according to the road condition information and/or the battery level of the power battery.

Further, the control unit is also configured to control the fuel cell to be deactivated when the battery level of the power battery is greater than or equal to a first threshold.

Further, the control unit is also configured to control the fuel cell to be deactivated when the battery level of the power battery is smaller than the first threshold and greater than or equal to a second threshold, and the road condition information meets a special road condition.

Further, the control unit is also configured to control the fuel cell to be activated when the battery level of the power battery is smaller than or equal to a third threshold, where the third threshold is smaller than the second threshold.

Further, the special road condition includes at least one of the following that: a ramp is smaller than a gradient threshold and a length is greater than a first length threshold, time duration of a red light is greater than a time threshold, a velocity of the vehicle is smaller than a velocity threshold, and a distance of the vehicle to a destination is smaller than a second length threshold.

The device for controlling the fuel cell has the same advantages as the method for controlling the fuel cell with respect to the existing technologies, which will not be repeated herein.

To achieve the objectives, a third aspect of the present disclosure provides a computing processing device, which includes: a memory in which a computer readable code is stored; and one or more processors. The computing processing apparatus is configured to perform the method for controlling a fuel cell of a vehicle as set forth in the first aspect of the embodiments of the present disclosure when the computer readable code is executed by the one or more processors.

To achieve the objectives, a fourth aspect of the present disclosure provides a computer program including a computer readable code. The computer readable code, when run on a computing processing apparatus, causes the computing processing apparatus to perform the method for controlling a fuel cell of a vehicle as set forth in the first aspect of the embodiments of the present disclosure.

To achieve the objectives, a fifth aspect of the present disclosure provides a computer readable storage medium in which the computer program as set forth in the fourth aspect of the embodiment of the present disclosure is stored.

Other features and advantages of the present disclosure will be further described in the detailed description of the embodiments.

### BRIEF DESCRIPTION OF THE DRAWINGS

The invention is defined in the appended claims.

The drawings that form part of this disclosure are used to provide a further understanding of the present disclosure, exemplary embodiments of the present disclosure and description of the exemplary embodiments are used to explain the present disclosure and do not constitute unnecessary limitations of the present disclosure. In the drawings:
FIG. 1 is a flowchart of a method for controlling a fuel cell of a vehicle in accordance with an embodiment of the present disclosure;
FIG. 2 is a flowchart of a method for controlling a fuel cell for a vehicle in accordance with another embodiment of the present disclosure;
FIG. 3 is a block diagram of a structure of a device for controlling a fuel cell of a vehicle in accordance with an embodiment of the present disclosure;
FIG. 4 is a schematic diagram of a structure of a computing processing apparatus in accordance with an embodiment of the present disclosure; and
FIG. 5 is a schematic diagram of a storage unit for portable or stationary implementation of a program code for the method according to the present disclosure, in accordance with an embodiment of the present disclosure.

Reference symbols are mainly listed as follows:
1 - detection unit; and 2 - control unit.

### DETAILED DESCRIPTION OF THE EMBODIMENTS

It should be understood that the embodiments and features in the embodiments of the present disclosure may be combined with each other in the absence of conflict.

The present disclosure will be described in detail below with reference to the drawings and in conjunction with the embodiments.

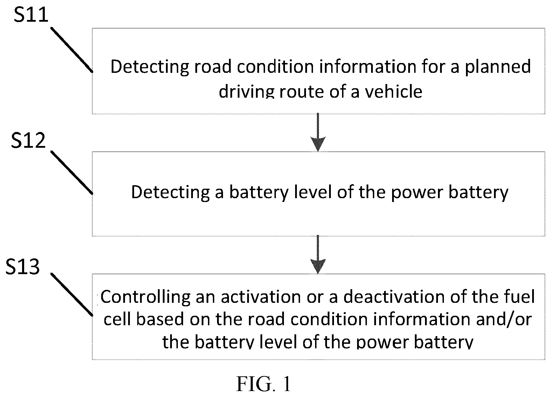

FIG. 1 is a flowchart of a method for controlling a fuel cell of a vehicle provided in an embodiment of the present disclosure. As shown in FIG. 1, the vehicle includes a fuel cell and a power battery, and the method includes steps S11 to S13.

In step S11, it is detected road condition information for a planned driving route of a vehicle.

Specifically, for example, the road condition information of the planned driving route of the vehicle is detected in combination with the intelligent navigation system. More specifically, a head unit system (HUT) will remind the driver to input a destination of this trip through a pop-up frame, and then the HUT will plan several different driving routes for the driver to choose through the intelligent navigation system. After the driving route is determined by the driver, the intelligent navigation system will be utilized by the vehicle to monitor current road condition information on the planned driving route in real time, and then the current road condition information is sent to a power control unit (PCU).

In step S12, it is detected a battery level of the power battery.

Specifically, an actual battery level of the power battery, such as a lithium battery, may be synchronously sent to the PCU by a battery management system (BMS).

In step S13, an activation or a deactivation of the fuel cell is controlled according to the road condition information and/or the battery level of the power battery.

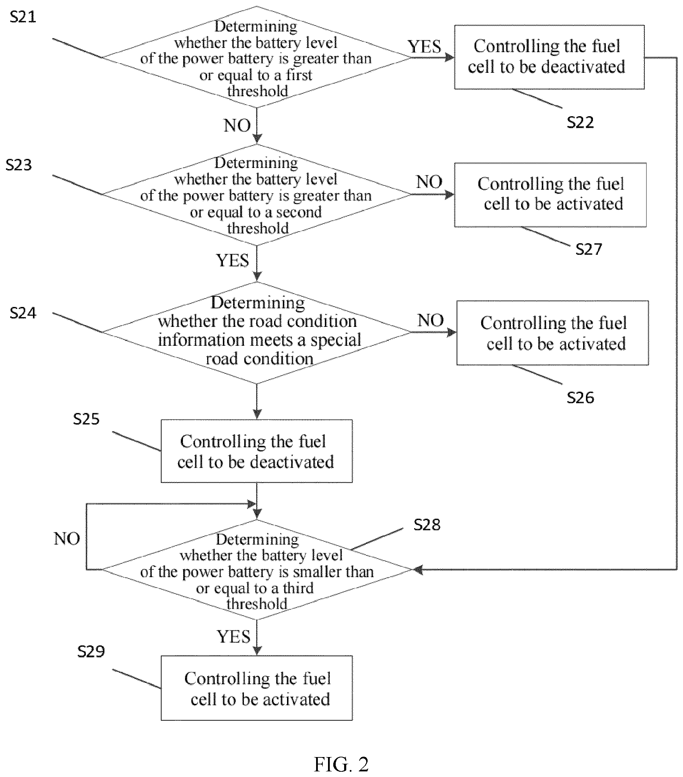

Specifically, the method for controlling the activation or deactivation of the fuel cell is shown in FIG. 2, the method includes steps S21 to S29.

In step S21, it is determined whether the battery level of the power battery is greater than or equal to a first threshold.

Specifically, the vehicle may first be controlled to run on fuel cell. Then adjustments may be made based on the battery level of the power battery. For example, it is firstly determined whether the battery level of the power battery is greater than or equal to the first threshold, and the first threshold may be 80%, which will not be limited in here.

In step S22, the fuel cell is controlled to be deactivated when the battery level of the power battery is greater than or equal to the first threshold.

Specifically, if the power battery is greater than or equal to the first threshold, then the fuel cell is controlled to be deactivated regardless of the road condition information, i.e., the vehicle is enabled to run on pure power using the power battery in this case, and thereafter, in case that the battery level of the power battery is greater than a third threshold (for example, but not limited to, 30%), the fuel cell will not be activated regardless of how the battery level of the power battery changes or how the road condition information changes, to avoid frequent activation or deactivation of the fuel cell.

In step S23, it is determined whether the battery level of the power battery is greater than or equal to a second threshold when the battery level of the power battery is smaller than the first threshold.

Specifically, if the battery level of the power battery is smaller than the first threshold, then it is necessary to determine whether the battery level of the power battery is greater than or equal to a second threshold, and the second threshold may be 60% when the first threshold is 80%, which also will not be limited in here.

In step S24, it is determined whether the road condition information meets a special road condition when the battery level of the power battery is greater than or equal to the second threshold.

Specifically, the special road condition includes at least one of the following that: a ramp is smaller than a gradient threshold (for example, but not limited to, -10°) and a length is greater than a first length threshold (for example, but not limited to, 1km), time duration of a red light is greater than a time threshold (for example, but not limited to, 30s), a velocity of the vehicle is smaller than a velocity threshold (for example, but not limited to, 10km/h) and a distance of the vehicle to the destination is smaller than a second length threshold (for example, but not limited to, 5km). If the battery level of the power battery is greater than or equal to the second threshold, then it is necessary to also determine whether the road condition information meets the above special road condition.

In step S25, the fuel cell is controlled to be deactivated when the road condition information meets the special road condition.

Specifically, if the road condition information meets the special road condition, then the fuel cell is controlled to be deactivated, i.e., the vehicle is enabled to be driven on pure power using the power battery in this case, and thereafter, in case that the battery level of the power battery is greater than the third threshold, the fuel cell will not be activated regardless of how the battery level of the power battery changes or how the road condition information changes, to avoid frequent activation or deactivation of the fuel cell.

In step S26, the fuel cell is controlled to be activated when the road condition information does not meet the special road condition.

Specifically, the fuel cell is controlled to remain activated when the road condition information does not meet the special road condition, meanwhile the power battery is charged, so that the fuel cell can be deactivated after the battery level of the power battery is gradually increased to be greater than or equal to the first threshold.

In step S27, the fuel cell is controlled to be activated when the battery level of the power battery is smaller than the second threshold.

Specifically, if the battery level of the power battery is smaller than the second threshold, then the fuel cell is controlled to remain activated regardless of the road condition information, and meanwhile the power battery is charged so that the fuel cell can be deactivated after the battery level of the power battery is gradually increased to be greater than or equal to the first threshold.

In step S28, it is determined whether the battery level of the power battery is smaller than or equal to a third threshold.

Specifically, with the use of the power battery of the vehicle, the battery level of the power battery keeps dropping, so it is necessary to determine whether the battery level of the power battery is smaller than or equal to the third threshold.

In step S29, the fuel cell is controlled to be activated when the battery level of the power battery is smaller than or equal to the third threshold.

Specifically, if the battery level of the power battery is smaller than or equal to the third threshold, then the vehicle can no longer be driven on pure electricity, so the fuel cell is controlled to be activated, meanwhile the power battery is charged so that the fuel cell can be deactivated after the battery level of the power battery is increased gradually to be greater than or equal to the first threshold.

In the embodiments of the present disclosure, the timing for activating the fuel cell is determined according to the battery level of the power battery (the fuel cell is allowed to be deactivated when the battery level is high enough), and the intelligent navigation system is participated for predicting the subsequent road conditions to determine whether the vehicle needs to stop for a long time or needs to be driven slowly, the activation or deactivation of the fuel cell is controlled by the PCU to reduce times of activation or deactivation of the fuel cell, thereby reducing power consumption of the power battery caused by frequent activation of the fuel cell is and ultimately achieving the objectives of saving energy and extending the service life of the fuel cell.

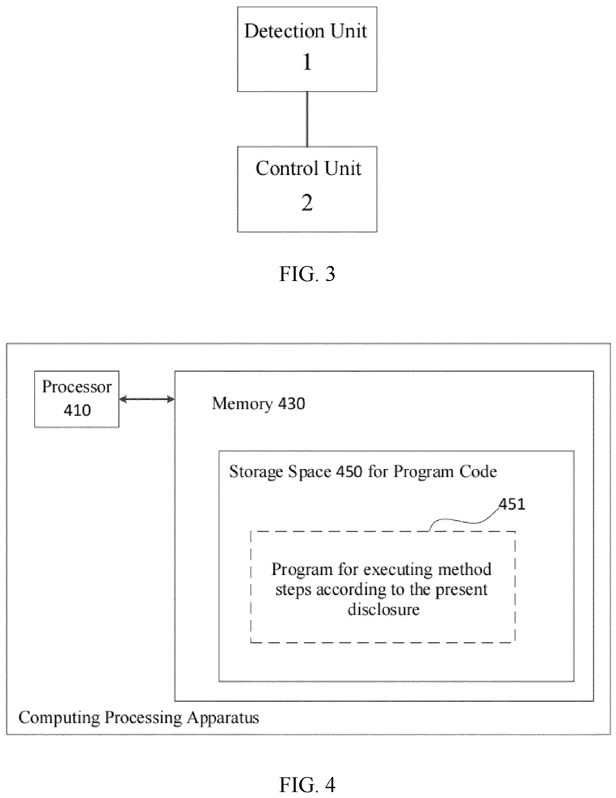

FIG. 3 is a block diagram of a structure of a device for controlling a fuel cell of a vehicle provided in an embodiment of the present disclosure. As shown in FIG. 3, the vehicle includes a fuel cell and a power battery, and the device includes a detection unit 1 and a control unit 2. The detection unit 1 is configured to: detect road condition information of a planned driving route of the vehicle; and detect a battery level of the power battery. The control unit 2 is configured to control an activation or deactivation of the fuel cell according to the road condition information and/or the battery level of the power battery.

Further, the control unit 2 is also configured to control the fuel cell to be deactivated when the battery level of the power battery is greater than or equal to a first threshold.

Further, the control unit 2 is also configured to control the fuel cell to be deactivated when the battery level of the power battery is smaller than the first threshold and greater than or equal to a second threshold and the road condition information meets the special road condition.

Further, the control unit 2 is also configured to control the fuel cell to be activated when the battery level of the power battery is smaller than or equal to a third threshold, where the third threshold is smaller than or equal to the second threshold.

Further, the special road condition includes at least one of the following that: a ramp is smaller than a gradient threshold and a length is greater than a first length threshold, time duration of a red light is greater than a time threshold, a velocity of the vehicle is smaller than a velocity threshold, and a distance of the vehicle to a destination is smaller than a second length threshold.

The device for controlling the fuel cell of the vehicle described in the above embodiment are similar to the method embodiments for controlling the fuel cell of the vehicle as above-described, which will not be repeated herein.

To achieve the above embodiments, the present disclosure also provides a computing processing apparatus, which includes: a memory in which a computer readable code is stored; and one or more processors. The computer readable code, when executed by the one or more processors, causes the computing processing apparatus to perform the aforementioned method for controlling the fuel cell of the vehicle.

To implement the foregoing embodiments, the present disclosure also provides a computer program, which includes the computer readable code that, when run on the computing processing apparatus, causes the computing processing apparatus to perform the aforementioned method for controlling a fuel cell of a vehicle.

To implement the foregoing embodiments, the present disclosure also provides a computer readable storage medium, in which the foregoing computer program is stored.

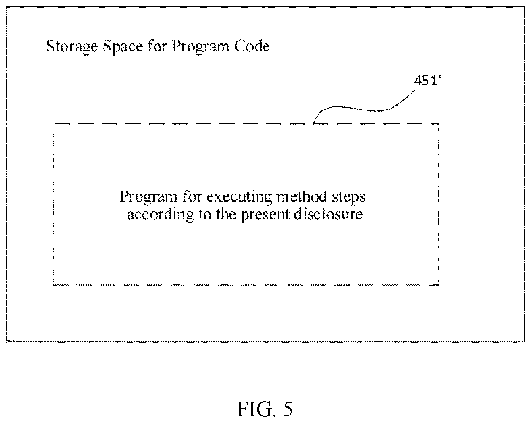

FIG. 4 is a schematic structural diagram of a computing processing apparatus provided in an embodiment of the present disclosure. The computing processing apparatus typically includes a processor 410 and a computer program product or computer-readable medium in the form of memory 430. The memory 430 may be an electronic memory such as a flash memory, an electrically erasable programmable read-only memory (EEPROM), an EPROM, a hard disk, or a ROM. The memory 430 has a storage space 450 for program code 451 for executing any of the method steps in the above-described methods. For example, the storage space 450 for program code may include individual program codes 451 for implementing the various steps in the method described above, respectively. These program codes may be read from or written to one or more computer program products. These computer program products include program code carriers such as hard disks, compact disks (CDs), memory cards, or floppy disks. Such a computer program product is typically a portable or fixed storage unit as shown in FIG. 5. The storage unit may have arrangements of storage segments, storage space, etc., similar to that of the memory 430 in a server of FIG. 4. The program code may, for example, be compressed in an appropriate form. Typically, the memory unit includes computer readable code 451', i.e., code that can be read by, for example, a processor such as 410 which, when run by a server, causes that server to perform the various steps in the method described above.

In the description of this specification, references to terms of "an embodiment", "some embodiments", "example", "specific example", or "some examples" mean that the specific features, structures, materials, or characteristics described in conjunction with the embodiment or example are included in at least one embodiment or example of the present disclosure. In this specification, the schematic representations of the above terms do not have to be directed to the same embodiment or example. Moreover, the specific features, structures, materials, or characteristics described may be combined in a suitable manner in any one or more embodiments or examples. In addition, in absence of conflicts, a person skilled in the art may combine the different embodiments or examples described in this specification and the features of the different embodiments or examples.

In addition, the terms "first" and "second" are used for descriptive purposes only and are not to be construed as indicating or implying relative importance or implicitly indicating the number of features indicated. Thus, a feature qualified with "first" and "second" may explicitly or implicitly include at least one such feature. In the description of the present disclosure, the phrase "a plurality of" means at least two, e.g., two, three, etc., unless otherwise expressly and specifically limited.

Any process or method description described in a flowchart or otherwise described herein may be understood to represent a module, a fragment, or a portion of code including one or more executable instructions for implementing steps of a customized logical function or process. In addition, the scope of preferred embodiments of the present disclosure includes additional implementations, which may not be performed in the order shown or discussed, including in substantially simultaneous order depending on the function involved, or in the reverse order. or in the reverse order, as should be understood by those skilled in the field to which embodiments of the present disclosure belong.

The logic and/or steps represented in the flowchart or otherwise described herein, for example, may be considered a definitive list of executable instructions for implementing the logical functions, and may be specifically implemented in any computer-readable medium for use by an instruction execution system, device, or apparatus (e.g., a computer-based system, a system including a processor, or other system that can take instructions from an instruction execution system, device, or apparatus and execute the instructions) or to be used in conjunction with these instruction execution systems, devices, or apparatus. For purposes of this specification, a "computer readable medium" may be any device that can contain, store, communicate, transmit, or transfer a program for use by or in conjunction with an instruction execution system, device, or apparatus. More specifically, examples of computer-readable media (a non-exhaustive list) include the following: electrically-connected sections (electronic devices) having one or more wiring, portable computer disk cartridges (magnetic devices), a random-access memory (RAM), a read-only memory (ROM), an erasable editable read-only memory (EPROM or a flash memory), fiber optic devices, and a portable compact disc read-only memory (CDROM). Alternatively, the computer readable medium may even be paper or other suitable medium on which the program may be printed, since the program may be obtained electronically, for example, by optical scanning of the paper or other medium, followed by editing, deciphering or, if necessary, processing in other suitable ways, and then storing it in the memory of a computer.

It should be understood that the various parts of the present disclosure may be implemented with hardware, software, firmware, or a combination thereof. In the above embodiments, a plurality of steps or methods may be implemented with software or firmware stored in memory and executed by a suitable instruction execution system. For example, if implemented in hardware, as in another implementation, any of the following well-known techniques: discrete logic circuits having logic gates for implementing logic functions on data signals, specialized integrated circuits having suitable combinations of logic gates, programmable gate arrays (PGAs), field programmable gate arrays (FPGAs), etc., or a combination thereof.

A person of ordinary skill in the art can understand that all or some of the steps carried by the method of the above embodiments can be implemented by instructing the relevant hardware by means of a program, the program may be stored in a computer readable storage medium which, when executed, caused one of the steps of the method embodiments or a combination thereof to be performed.

In addition, each functional unit in the various embodiments of the present disclosure may be integrated in a processing module, or the individual units may physically exist separately, or two or more units may be integrated in a single module. The integrated module may be implemented either in the form of hardware or in the form of software functional modules. The integrated module may also be stored in a computer readable storage medium if it is implemented in the form of software function modules and sold or used as a standalone product.

The above-mentioned storage medium may be a read-only memory, a disk or a CD-ROM, etc.

## Claims

1. A method for controlling a fuel cell of a vehicle, the vehicle comprising a fuel cell and a power battery, the method comprising:
detecting road condition information for a planned driving route of a vehicle; (S11)
detecting a battery level of the power battery; (S12) and
controlling an activation or a deactivation of the fuel cell based on the road condition information and/or the battery level of the power battery, (S13)
wherein the controlling an activation or a deactivation of the fuel cell based on the road condition information and/or the battery level of the power battery comprises:
controlling the fuel cell to be deactivated when the battery level of the power battery is greater than or equal to a first threshold, (S22)
**characterized in that** the controlling an activation or a deactivation of the fuel cell based on the road condition information and/or the battery level of the power battery further comprises:
controlling the fuel cell to be deactivated when the battery level of the power battery is smaller than the first threshold and greater than or equal to a second threshold, and the road condition information meets a special road condition, (S25)
controlling the fuel cell to be activated when the battery level of the power battery is smaller than or equal to a third threshold, (S29)
wherein the third threshold is smaller than the second threshold,
wherein the special road condition comprises at least one of:
a ramp is smaller than a gradient threshold and a length is greater than a first length threshold, time duration of a red light is greater than a time threshold, a velocity of the vehicle is smaller than a velocity threshold, and a distance of the vehicle to a destination is smaller than a second length threshold,
and wherein,
- if the battery level of the power battery is greater than or equal to the first threshold, the fuel cell is controlled to be deactivated regardless of the road condition information; (S21,S22)
- if the battery level of the power battery is smaller than the first threshold, then it is determined whether the battery level of the power battery is greater than or equal to the second threshold (S23) and whether the road condition information meets the special road condition, (S24) and if both are met, the fuel cell is controlled to be deactivated, (S25) and if the road condition information does not meet the special road condition, the fuel cell is controlled to be activated, (S26) and the power battery is charged so that the fuel cell can be deactivated after the battery level of the power battery is gradually increased to be greater than or equal to the first threshold;
- if the battery level of the power battery is smaller than the second threshold, the fuel cell is controlled to remain activated regardless of the road condition information (S29) and the power battery is charged so that the fuel cell can be deactivated after the battery level of the power battery is gradually increased to be greater than or equal to the first threshold.

2. A device for controlling a fuel cell of a vehicle, the vehicle comprising a fuel cell and a power battery, the device comprising:
a detection unit, (1) configured to detect road condition information for a planned driving route of the vehicle, and detect a battery level of the power battery; and
a control unit, (2) configured to control an activation or a deactivation of the fuel cell according to the road condition information and/or the battery level of the power battery,
wherein
the control unit is further configured to control the fuel cell to be deactivated when the battery level of the power battery is greater than or equal to a first threshold,
**characterized in that**:
the control unit is further configured to control the fuel cell to be deactivated when the battery level of the power battery is smaller than the first threshold and greater than or equal to a second threshold and the road condition information meets a special road condition
the control unit is further configured to control the fuel cell to be activated when the battery level of the power battery is smaller than or equal to a third threshold, wherein the third threshold is smaller than the second threshold,
wherein the special road condition comprises at least one of:
a ramp is smaller than a gradient threshold and a length is greater than a first length threshold, time duration of a red light is greater than a time threshold, a velocity of the vehicle is smaller than a velocity threshold, and a distance of the vehicle to a destination is smaller than a second length threshold, and wherein the control unit is further configured to perform the following:
- if the battery level of the power battery is greater than or equal to the first threshold, the fuel cell is controlled to be deactivated regardless of the road condition information;
- if the battery level of the power battery is smaller than the first threshold, then it is determined whether the battery level of the power battery is greater than or equal to the second threshold and whether the road condition information meets the special road condition, and if both are met, the fuel cell is controlled to be deactivated, and if the road condition information does not meet the special road condition, the fuel cell is controlled to be activated and the power battery is charged so that the fuel cell can be deactivated after the battery level of the power battery is gradually increased to be greater than or equal to the first threshold;
- if the battery level of the power battery is smaller than the second threshold, the fuel cell is controlled to remain activated regardless of the road condition information and the power battery is charged so that the fuel cell can be deactivated after the battery level of the power battery is gradually increased to be greater than or equal to the first threshold.

3. A vehicle, comprising the device for controlling a fuel cell of a vehicle as claimed in claim 2.

4. A computing processing apparatus, comprising:
a memory (430) in which a computer readable code (451) is stored; and
one or more processors, (410) wherein the computing processing apparatus is configured to, when the computer readable code is executed by the one or more processors, perform the method for controlling a fuel cell of a vehicle as claimed in claim 1.

## Patentansprüche

1. Verfahren zum Steuern einer Brennstoffzelle eines Fahrzeugs, wobei das Fahrzeug eine Brennstoffzelle und einen Power-Akku aufweist, wobei das Verfahren umfasst:
Detektieren von Fahrbahnzustandsinformationen für eine geplante Fahrstrecke eines Fahrzeugs (S11);
Detektieren eines Akkustands des Power-Akkus (S12); und
Steuern einer Aktivierung oder einer Deaktivierung der Brennstoffzelle basierend auf den Fahrbahnzustandsinformationen und/oder dem Akkustand des Power-Akkus (S13),
wobei das Steuern einer Aktivierung oder einer Deaktivierung der Brennstoffzelle basierend auf den Fahrbahnzustandsinformationen und/oder dem Akkustand des Power-Akkus umfasst:
Steuern der Brennstoffzelle, so dass diese deaktiviert wird, wenn der Akkustand des Power-Akkus höher als oder gleich einem ersten Schwellenwert ist (S22),
**dadurch gekennzeichnet, dass** das Steuern einer Aktivierung oder einer Deaktivierung der Brennstoffzelle basierend auf den Fahrbahnzustandsinformationen und/oder dem Akkustand des Power-Akkus ferner umfasst:
Steuern der Brennstoffzelle, so dass diese deaktiviert wird wenn der Akkustand des Power-Akkus niedriger ist als der erste Schwellenwert und größer als oder gleich einem zweiten Schwellenwert ist und die Fahrbahnzustandsinformationen einen bestimmten Fahrbahnzustand erfüllen (S25),
Steuern der Brennstoffzelle, so dass diese aktiviert wird, wenn der Akkustand des Power-Akkus niedriger als oder gleich einem dritten Schwellenwert ist (S29),
wobei der dritte Schwellenwert kleiner als der zweite Schwellenwert ist,
wobei der bestimmte Fahrbahnzustand mindestens eines aus Folgendem umfasst:
eine Auffahrt ist kleiner als ein Gradientenschwellenwert und eine Länge ist größer als ein erster Längenschwellenwert, eine Zeitdauer eines roten Lichts ist größer als ein Zeitdauerschwellenwert, eine Geschwindigkeit des Fahrzeugs ist kleiner als ein Geschwindigkeitsschwellenwert, und eine Strecke des Fahrzeugs zu einem Zielort ist kleiner als ein zweiter Längenschwellenwert, und wobei
- wenn der Akkustand des Power-Akkus höher als oder gleich dem ersten Schwellenwert ist, die Brennstoffzelle so gesteuert wird, dass sie deaktiviert wird, unabhängig von den Fahrbahnzustandsinformationen (S21, S22);
- wenn der Akkustand des Power-Akkus niedriger als der erste Schwellenwert ist, dann wird bestimmt, ob der Akkustand des Power-Akkus höher als oder gleich dem zweiten Schwellenwert ist (S23) und ob die Fahrbahnzustandsinformationen den bestimmten Fahrbahnzustand erfüllen (S24), und wenn beides erfüllt wird, die Brennstoffzelle so gesteuert wird, dass sie deaktiviert wird (S25), und wenn die Fahrbahnzustandsinformationen den bestimmten Fahrbahnzustand nicht erfüllen, die Brennstoffzelle so gesteuert wird, dass sie aktiviert wird (S26), und der Power-Akku so geladen wird, dass die Brennstoffzelle deaktiviert werden kann, nachdem der Akkustand des Power-Akkus allmählich erhöht wird, um höher als oder gleich dem ersten Schwellenwert zu sein;
- wenn der Akkustand des Power-Akkus niedriger als der zweite Schwellenwert ist, die Brennstoffzelle so gesteuert wird, dass sie aktiviert bleibt, unabhängig von den Fahrbahnzustandsinformationen (S29), und der Power-Akku so geladen wird, dass die Brennstoffzelle deaktiviert werden kann, nachdem der Akkustand des Power-Akkus allmählich erhöht wird, um höher als oder gleich dem ersten Schwellenwert zu sein.

2. Vorrichtung zum Steuern einer Brennstoffzelle eines Fahrzeugs, wobei das Fahrzeug eine Brennstoffzelle und einen Power-Akku aufweist, wobei die Vorrichtung aufweist:
eine Detektionseinheit (1), die dazu ausgebildet ist, Fahrbahnzustandsinformationen für eine geplante Fahrstrecke des Fahrzeugs zu detektieren und einen Akkustand des Power-Akkus zu detektieren; und
eine Steuereinheit (2), die dazu ausgebildet ist, eine Aktivierung oder eine Deaktivierung der Brennstoffzelle entsprechend den Fahrbahnzustandsinformationen und/oder dem Akkustand des Power-Akkus zu steuern, wobei die Steuereinheit ferner dazu ausgebildet ist, die Brennstoffzelle so zu steuern, dass sie deaktiviert wird, wenn der Akkustand des Power-Akkus höher als oder gleich einem ersten Schwellenwert ist,
**dadurch gekennzeichnet, dass**
die Steuereinheit ferner dazu ausgebildet ist, die Brennstoffzelle so zu steuern, dass sie deaktiviert wird, wenn der Akkustand des Power-Akkus niedriger ist als der ersten Schwellenwert und höher als oder gleich einem zweiten Schwellenwert ist und die Fahrbahnzustandsinformationen einen bestimmten Fahrbahnzustand erfüllen,
wobei die Steuereinheit ferner dazu ausgebildet ist, die Brennstoffzelle so zu steuern, dass wie aktiviert wird, wenn der Akkustand des Power-Akkus niedriger als oder gleich einem dritten Schwellenwert ist, wobei der dritte Schwellenwert kleiner als der zweite Schwellenwert ist,
wobei der bestimmte Fahrbahnzustand mindestens eines aus Folgendem umfasst:
eine Auffahrt ist kleiner als ein Gradientenschwellenwert und eine Länge ist größer als ein erster Längenschwellenwert, eine Zeitdauer eines roten Lichts ist größer als ein Zeitdauerschwellenwert, eine Geschwindigkeit des Fahrzeugs ist kleiner als ein Geschwindigkeitsschwellenwert, und eine Strecke des Fahrzeugs zu einem Zielort ist kleiner als ein zweiter Längenschwellenwert, und wobei die Steuereinheit ferner dazu ausgebildet ist, Folgendes durchzuführen:
- wenn der Akkustand des Power-Akkus höher als oder gleich dem ersten Schwellenwert ist, wird die Brennstoffzelle so gesteuert, dass sie deaktiviert wird, unabhängig von den Fahrbahnzustandsinformationen;
- wenn der Akkustand des Power-Akkus niedriger als der erste Schwellenwert ist, dann wird bestimmt, ob der Akkustand des Power-Akkus höher als oder gleich dem zweiten Schwellenwert ist (S12) und ob die Fahrbahnzustandsinformationen den bestimmten Fahrbahnzustand erfüllen (S24), und wenn beides erfüllt wird, wird die Brennstoffzelle so gesteuert, dass sie deaktiviert wird (S25), und wenn die Fahrbahnzustandsinformationen den bestimmten Fahrbahnzustand nicht erfüllen, wird die Brennstoffzelle so gesteuert, dass sie aktiviert wird (S26), und der Power-Akku wird so geladen, dass die Brennstoffzelle deaktiviert werden kann, nachdem der Akkustand des Power-Akkus allmählich erhöht wird, um höher als oder gleich dem ersten Schwellenwert zu sein;
- wenn der Akkustand des Power-Akkus niedriger als der zweite Schwellenwert ist, wird die Brennstoffzelle so gesteuert, dass sie aktiviert bleibt, unabhängig von den Fahrbahnzustandsinformationen (S29), und der Power-Akku wird so geladen, dass die Brennstoffzelle deaktiviert werden kann, nachdem der Akkustand des Power-Akkus allmählich erhöht wird, um höher als oder gleich dem ersten Schwellenwert zu sein.

3. Fahrzeug, das die Vorrichtung zum Steuern einer Brennstoffzelle eines Fahrzeug nach Anspruch 2 aufweist.

4. Rechenverarbeitungsvorrichtung, die aufweist:
einen Speicher (430), in dem ein computerlesbarer Code (451) gespeichert ist; und
einen oder mehrere Prozessoren (410), wobei die Rechenverarbeitungsvorrichtung dazu ausgebildet ist, wenn der computerlesbare Code von dem einen oder den mehreren Prozessoren ausgeführt wird, das Verfahren zum Steuern einer Brennstoffzelle eines Fahrzeugs nach Anspruch 1 durchzuführen.

## Revendications

1. Procédé de commande d'une pile à combustible d'un véhicule, le véhicule comprenant une pile à combustible et une batterie de puissance, le procédé comprenant les étapes consistant à :
détecter des informations de conditions routières d'un itinéraire de circulation planifié d'un véhicule, (S11) ;
détecter un niveau de batterie de la batterie de puissance, (S12) ; et
commander une activation ou une désactivation de la pile à combustible sur la base des informations de conditions routières et/ou du niveau de batterie de la batterie de puissance, (S13),
dans lequel
l'étape de commande d'une activation ou d'une désactivation de la pile à combustible sur la base des informations de conditions routières et/ou du niveau de batterie de la batterie de puissance comprend l'étape consistant à :
commander la désactivation de la pile à combustible lorsque le niveau de batterie de la batterie de puissance est supérieur ou égal à un premier seuil, (S22),
**caractérisé en ce que** l'étape de commande d'une activation ou d'une désactivation de la pile à combustible sur la base des informations de conditions routières et/ou du niveau de batterie de la batterie de puissance comprend en outre les étapes consistant à :
commander la désactivation de la pile à combustible lorsque le niveau de batterie de la batterie de puissance est inférieur au premier seuil et supérieur ou égal à un deuxième seuil, et que les informations de conditions routières satisfont une condition routière spéciale, (S25),
commander l'activation de la pile à combustible lorsque le niveau de batterie de la batterie de puissance est inférieur ou égal à un troisième seuil, (S29),
dans lequel le troisième seuil est inférieur au deuxième seuil,
dans lequel la condition routière spéciale comprend au moins une condition telle que :
une pente est inférieure à un seuil de gradient et une longueur est supérieure à un premier seuil de longueur, une durée d'un feu rouge est supérieure à un premier seuil, une vitesse du véhicule est inférieure à un seuil de vitesse, et une distance du véhicule jusqu'à une destination est inférieure à un second seuil de longueur,
et dans lequel,
- si le niveau de batterie de la batterie de puissance est supérieur ou égal au premier seuil, l'activation de la pile à combustible est commandée indépendamment des informations de conditions routières, (S21, S22) ;
- si le niveau de batterie de la batterie de puissance est inférieur au premier seuil, il est alors déterminé si le niveau de batterie de la batterie de puissance est supérieur ou égal au deuxième seuil, (S23), et si les conditions d'informations routières satisfont la condition routière spéciale, (S24), et si ces deux conditions sont satisfaites, la désactivation de la pile à combustible est commandée, (S25), et si les informations de conditions routières ne satisfont pas la condition routière spéciale, l'activation de la pile à combustible est commandée, (S26), et la batterie de puissance est chargée de sorte que la pile à combustible puisse être désactivée après l'augmentation graduelle du niveau de batterie de la batterie de puissance jusqu'à un niveau supérieur ou égal au premier seuil ;
- si le niveau de batterie de la batterie de puissance est inférieur au deuxième seuil, la pile à combustible est commandée pour demeurer activée indépendamment des informations de conditions routières, (S29), et la batterie de puissance est chargée de sorte que la pile à combustible puisse être désactivée après l'augmentation graduelle du niveau de batterie de la batterie de puissance jusqu'à un niveau supérieur ou égal au premier seuil.

2. Dispositif de commande d'une pile à combustible d'un véhicule, le véhicule comprenant une pile à combustible et une batterie de puissance, le dispositif comprenant :
une unité de détection (1), configurée pour détecter des informations de conditions routières d'un itinéraire de circulation planifié du véhicule, et pour détecter un niveau de batterie de la batterie de puissance ; et
une unité de commande (2), configurée pour commander une activation ou une désactivation de la pile à combustible conformément aux informations de conditions routières et/ou au niveau de batterie de la batterie de puissance,
dans lequel
l'unité de commande est en outre configurée pour commander la désactivation de la pile à combustible lorsque le niveau de batterie de la batterie de puissance est supérieur ou égal à un premier seuil,
**caractérisé en ce que** :
l'unité de commande est en outre configurée pour commander la désactivation de la pile à combustible lorsque le niveau de batterie de la batterie de puissance est inférieur au premier seuil et supérieur ou égal à un deuxième seuil et que les informations de conditions routières satisfont une condition routière spéciale,
l'unité de commande est en outre configurée pour commander l'activation de la pile à combustible lorsque le niveau de batterie de la batterie de puissance est inférieur ou égal à un troisième seuil, dans lequel le troisième seuil est inférieur au deuxième seuil,
dans lequel la condition routière spéciale comprend au moins une condition telle que :
une pente est inférieure à un seuil de gradient et une longueur est supérieure à un premier seuil de longueur, une durée d'un feu rouge est supérieure à un premier seuil, une vitesse du véhicule est inférieure à un seuil de vitesse, et une distance du véhicule jusqu'à une destination est inférieure à un second seuil de longueur, et dans lequel l'unité de commande est en outre configurée pour mettre en œuvre les commandes suivantes consistant à :
- si le niveau de batterie de la batterie de puissance est supérieur ou égal au premier seuil, commander la désactivation de la pile à combustible indépendamment des informations de conditions routières ;
- si le niveau de batterie de la batterie de puissance est inférieur au premier seuil, déterminer alors si le niveau de batterie de la batterie de puissance est supérieur ou égal au deuxième seuil et si les conditions d'informations routières satisfont la condition routière spéciale, et si ces deux conditions sont satisfaites, commander la désactivation de la pile à combustible, et si les informations de conditions routières ne satisfont pas la condition routière spéciale, commander l'activation de la pile à combustible et charger la batterie de puissance de sorte que la pile à combustible puisse être désactivée après l'augmentation graduelle du niveau de batterie de la batterie de puissance jusqu'à un niveau supérieur ou égal au premier seuil ;
- si le niveau de batterie de la batterie de puissance est inférieur au deuxième seuil, commander la pile à combustible pour qu'elle demeure activée indépendamment des informations de conditions routières et charger la batterie de puissance de sorte que la pile à combustible puisse être désactivée après l'augmentation graduelle du niveau de batterie de la batterie de puissance jusqu'à un niveau supérieur ou égal au premier seuil.

3. Véhicule, comprenant le dispositif de commande d'une pile à combustible d'un véhicule selon la revendication 2.

4. Appareil de traitement informatique, comprenant :
une mémoire (430) dans laquelle est maintenu un code lisible par ordinateur (451) ; et
un ou plusieurs processeurs (410),
dans lequel l'appareil de traitement informatique est configuré, lorsque le code lisible par ordinateur est exécuté par le ou les processeurs, pour mettre en œuvre le procédé de commande d'une pile à combustible d'un véhicule selon la revendication 1.
